# FASCICULE DE BREVET EUROPEEN

(11) **EP 4 484 075 B1**
(45) Date de publication et mention de la délivrance du brevet: **05.08.2026**
(21) Numéro de dépôt: 24183250.0
(22) Date de dépôt: 20.06.2024
(51) Int. Cl.: B25J 5/02, B25J 11/00, B25J 19/00, B05B 13/04, B05B 16/40, B05B 16/80, B64F 5/10

(54) **DISPOSITIF DE PEINTURE COMPORTANT UN BRAS ROBOTISÉ MOBILE SUPPORTANT UN OUTIL ET UN ÉQUIPEMENT MOBILE RELIÉ PAR UNE LIAISON OMBILICALE À L'OUTIL**
LACKIERVORRICHTUNG MIT EINEM BEWEGLICHEN ROBOTERARM ZUR UNTERSTÜTZUNG EINES WERKZEUGS UND EINER MOBILEN VORRICHTUNG, DIE MIT EINER VERSORGUNGSVERBINDUNG AM WERKZEUG VERBUNDEN IST
PAINTING DEVICE COMPRISING A MOBILE ROBOT ARM SUPPORTING A TOOL AND A MOBILE EQUIPMENT CONNECTED BY AN UMBILICAL LINK TO THE TOOL

(30) Priorité: 26.06.2023 FR 2306618
(43) Date de publication de la demande: 01.01.2025
(73) Titulaire: Airbus SAS, 31700 Blagnac Cedex (FR); Airbus Operations S.L., 28906 Getafe (ES); AIRBUS Operations GmbH, 21129 Hamburg (DE)
(72) Inventeur: LAGUTIN, Wladislav, 21129 HAMBURG (DE); GARCIA AMADO, Juan Francisco, 28906 GETAFE (ES); MORINIERE, Boris, 31060 TOULOUSE (FR)
(74) Mandataire: Fantin, Laurent

(56) Documents cités:
- EP-B1- 1 889 666
- WO-A1-91/14539
- WO-A1-96/36461
- US-A1- 2015 314 890
- US-A1- 2015 343 473
- US-A1- 2017 106 393
- US-A1- 2018 193 870
- US-A1- 2019 262 966
- US-A1- 2020 198 154

## Description

La présente demande se rapporte à un dispositif de peinture comportant un bras robotisé mobile supportant un outil et un équipement mobile relié par une liaison ombilicale à l'outil ainsi qu'à une installation de peinture comprenant au moins un tel dispositif de peinture.

Selon un mode de réalisation décrit dans le document US20150375390, une installation de peinture configurée pour peindre un aéronef comprend plusieurs dispositifs de peinture comportant chacun une plate-forme, une potence mobile par rapport à la plate-forme ainsi qu'un bras robotisé relié à la potence. La potence comprend un mât ainsi qu'une traverse horizontale mobile verticalement le long du mât, le bras robotisé étant mobile le long de la traverse de la potence. Dans le cas d'un aéronef de grandes dimensions, le mât de la potence a une hauteur supérieure à 10 m et la traverse a une longueur de quelques mètres. Les documents WO91/14539A1 (SOUTHWEST RES INST [US]), US2018/193870A1 (NGO SON N [US]), US2017/106393A1 (HAMPSON BENJAMIN LLOYD [US] et al.) et US2015/343473 A1 (MATHIS DENNIS R [US]) divulguent divers exemples d'installations de peinture adaptées à la peinture d'un aéronef.

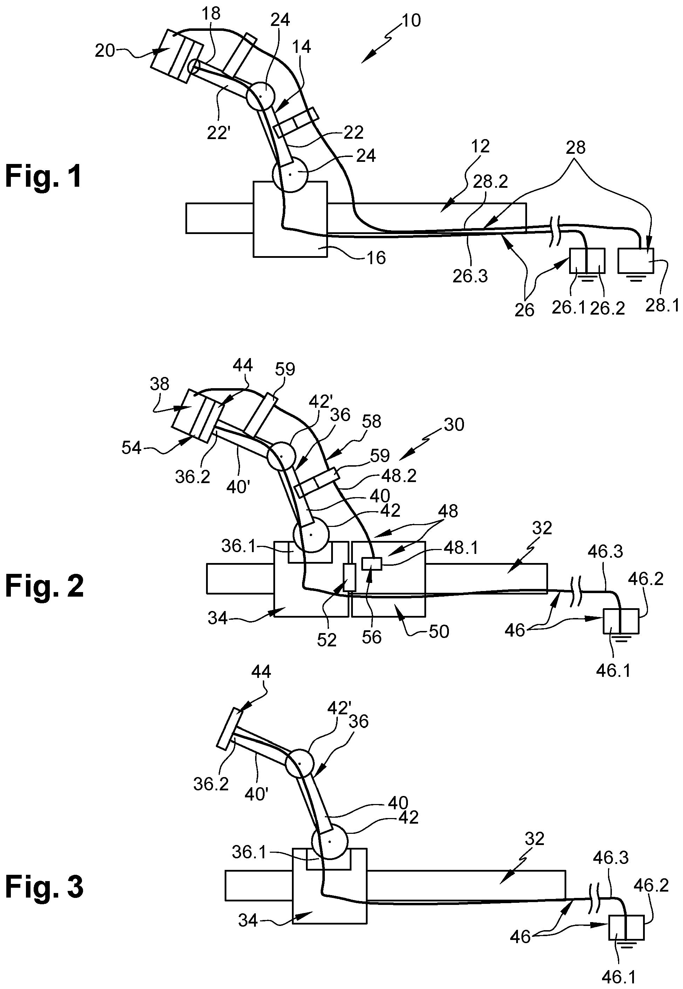

Selon un mode de réalisation visible sur la figure 1, un dispositif de peinture 10 comprend un système de guidage 12, comme la traverse d'une potence, ainsi qu'un bras robotisé 14 mobile le long du système de guidage 12. Le bras robotisé 14 comprend un socle 16 mobile le long du système de guidage 12, une extrémité libre 18 configurée pour supporter un outil 20, au moins des premier et deuxième segments 22, 22' ainsi que des articulations 24 reliant les premier et deuxième segments 22, 22' entre eux et le premier segment 22 au socle 16.

Pour chaque bras robotisé 14, l'installation de peinture comprend un système de commande et d'alimentation en énergie 26 comportant un poste de commande 26.1, une alimentation en énergie 26.2 ainsi qu'un faisceau de câbles 26.3 reliant le poste de commande 26.1 et l'alimentation en énergie 26.2 au bras robotisé 14.

Pour alimenter l'outil 20 en peinture, l'installation de peinture comprend un système d'alimentation en peinture 28 comportant au moins un réservoir de peinture 28.1 fixe ainsi qu'au moins un conduit de peinture 28.2 configuré pour acheminer la peinture du réservoir de peinture 28.1 jusqu'à l'outil 20.

Le faisceau de câbles 26.3 et le conduit de peinture 28.2 présentent des longueurs importantes, plusieurs dizaines de mètres dans le cas d'un dispositif de peinture adapté à un aéronef, pour suivre les mouvements du bras robotisé 14 lorsque ce dernier se déplace le long du mât et/ou de la traverse.

Or, l'écoulement de la peinture dans un conduit de peinture 28.2 mesurant plusieurs dizaines de mètres est difficile et requiert des pompes relativement puissantes et donc énergivores. De plus, le conduit de peinture 28.2 étant très long, les opérations de nettoyage dudit conduit, lors d'un changement de peinture par exemple, engendrent une perte importante de peinture, une consommation importante de produits de nettoyage et requièrent beaucoup de temps.

La présente invention, telle que définie dans la revendication 1 ci-jointe, vise à remédier à tout ou partie des inconvénients de l'art antérieur.

A cet effet, l'invention a pour objet un dispositif de peinture comprenant au moins un système de guidage, au moins un premier support mobile configuré pour se déplacer le long du système de guidage, un bras robotisé solidaire du premier support mobile et comportant une extrémité libre, au moins un premier outil relié à l'extrémité libre du bras robotisé ainsi qu'au moins un premier équipement relié par au moins une liaison ombilicale au premier outil. Selon l'invention, le premier équipement associé au premier outil est relié au premier support mobile supportant le bras robotisé.

Cette solution permet de réduire la longueur de la liaison ombilicale reliant le premier équipement et le premier outil, ce qui facilite l'écoulement d'un fluide dans la liaison ombilicale.

Selon une autre caractéristique, le premier équipement est relié à un deuxième support mobile, lui-même relié au premier support mobile, configuré pour se déplacer le long du système de guidage.

Selon une autre caractéristique, les premier et deuxième supports mobiles sont reliés par une liaison articulée.

Selon une autre caractéristique, le premier outil est relié à l'extrémité libre du bras robotisé par une première liaison démontable.

Selon une autre caractéristique, le premier équipement est relié au premier support mobile par une liaison démontable.

Selon une autre caractéristique, le premier équipement est solidaire d'un deuxième support mobile relié par une liaison démontable au premier support mobile.

Selon une autre caractéristique, le premier outil est associé à au moins un premier équipement dédié au premier outil et directement ou indirectement relié au premier outil par une première liaison ombilicale ainsi qu'à au moins un deuxième équipement commun à plusieurs outils et directement ou indirectement relié au premier outil par une deuxième liaison ombilicale, chaque premier équipement étant relié de manière démontable au premier support mobile, chaque deuxième équipement étant relié de manière permanente du premier support mobile.

Selon une autre caractéristique, au moins une liaison ombilicale est solidarisée au bras robotisé par au moins une liaison démontable.

L'invention a également pour objet une installation de peinture adaptée pour peindre un aéronef comprenant au moins un dispositif de peinture selon l'une des caractéristiques précédentes.

Selon une autre caractéristique, l'installation de peinture comprend plusieurs systèmes de guidage agencés de manière symétrique par rapport à un plan médian vertical et répartis autour d'un cercle présentant un diamètre supérieur à celui d'un fuselage d'un aéronef à peindre.

Selon une autre caractéristique, l'installation de peinture comprend une cabine de peinture qui comporte des parois formant une enceinte ainsi qu'au moins une structure supportant les parois et chaque système de guidage.

Selon une autre caractéristique, l'installation de peinture comprend au moins une zone de stockage configurée pour stocker au moins un outil, au moins un accessoire d'outil ou au moins un consommable et positionnée dans le prolongement de la cabine de peinture, au moins un système de guidage étant suffisamment long pour être positionné en partie dans la zone de stockage d'outils.

Selon une autre caractéristique, la zone de stockage comprend au moins un support configuré pour supporter au moins un outil, au moins un accessoire d'outil ou au moins un consommable, le support et le système de guidage étant agencés de sorte qu'un bras robotisé coulissant le long du système de guidage puisse atteindre un outil, un accessoire d'outil ou un consommable positionné sur le support.

Selon une autre caractéristique, l'installation de peinture comprend au moins un chariot support configuré pour supporter au moins un outil.

D'autres caractéristiques et avantages ressortiront de la description de l'invention qui va suivre, description donnée à titre d'exemple uniquement, en regard des dessins annexés parmi lesquels :
- La figure 1 est une représentation schématique d'un dispositif de peinture illustrant un mode de réalisation de l'art antérieur,
- La figure 2 est une représentation schématique d'un dispositif de peinture illustrant un mode de réalisation de l'invention,
- La figure 3 est une représentation schématique du dispositif de peinture visible sur la figure 2 sans outil,
- La figure 4 est une représentation schématique d'un chariot support d'outil illustrant un mode de réalisation de l'invention,
- La figure 5 est une vue de face d'un dispositif de peinture illustrant un mode de réalisation de l'invention,
- La figure 6 est une vue de face d'un dispositif de peinture illustrant un autre mode de réalisation de l'invention,
- La figure 7 est une vue en perspective d'une installation de peinture, comportant une cabine de peinture à l'état ouvert, illustrant un mode de réalisation de l'invention,
- La figure 8 est une vue en perspective d'une structure d'une cabine de peinture, à l'état ouvert, illustrant un mode de réalisation de l'invention,
- La figure 9 est une vue en perspective de la structure de la cabine de peinture visible sur la figure 8 à l'état fermé,
- La figure 10 est une coupe transversale schématique d'une structure d'une cabine de peinture illustrant un mode de réalisation de l'invention,
- La figure 11 est une vue en perspective d'une partie inférieure d'une cabine de peinture illustrant un mode de réalisation de l'invention,
- La figure 12 est une vue en perspective d'un poste de stockage d'outils illustrant un mode de réalisation de l'invention.

Selon un mode de réalisation visible sur les figures 2, 3, 5 et 6, un dispositif de peinture 30 comprend au moins un système de guidage 32, au moins un premier support mobile 34 configuré pour se déplacer le long du système de guidage 32, un bras robotisé 36 solidaire du premier support mobile 34 ainsi qu'au moins un premier outil 38 déplacé par le bras robotisé 36.

Le bras robotisé 36 comprend une première extrémité 36.1 solidaire du premier support mobile 34, une extrémité libre 36.2, plusieurs segments 40, 40' ainsi qu'au moins une articulation 42' reliant les segments 40, 40' entre eux et comportant au moins une liaison pivot.

Bien entendu, l'invention n'est pas limitée à ce type de bras robotisé 36. Ainsi, ce dernier pourrait être un bras robotisé de type cartésien.

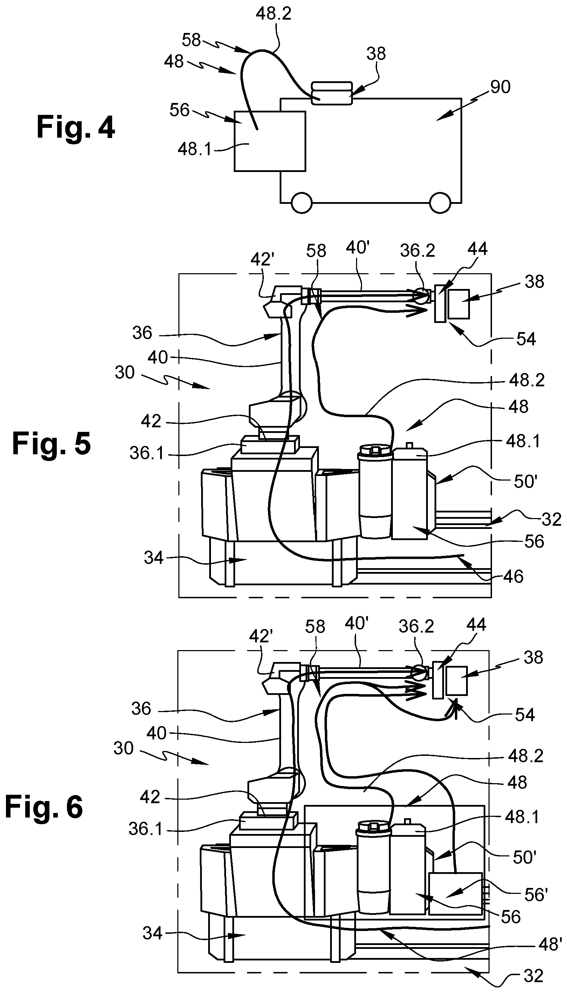

Selon un mode de réalisation visible sur les figures 5 et 6, la première extrémité 36.1 est un socle fixé sur le premier support mobile 34. Le bras robotisé 36 comprend des premier et deuxième segments 40, 40', le premier segment 40 étant relié au socle par une première articulation 42, les premier et deuxième segments 40, 40' étant reliés entre eux par une deuxième articulation 42'. L'invention n'est pas limitée à ce nombre de segments. Généralement, le bras robotisé comprend au maximum trois segments et chaque articulation 42 n'autorise que des mouvements de rotation.

Comme illustré sur la figure 2, le premier outil 38 est directement ou indirectement relié à l'extrémité libre 36.2. Selon un mode de réalisation, le premier outil 38 est un outil configuré pour pulvériser de la peinture.

Selon une configuration, le dispositif de peinture 30 comprend un porte-outil 44, également appelé effecteur, solidaire de l'extrémité libre 36.2 du bras robotisé 36 et configuré pour supporter le premier outil 38. Le porte-outil 44 peut être relié à l'extrémité libre 36.2 par une articulation.

Le dispositif de peinture 30 comprend également un système de commande et d'alimentation en énergie 46 configuré pour alimenter en énergie et piloter à distance le bras robotisé 36. Selon un mode de réalisation, le système de commande et d'alimentation en énergie comporte un poste de commande 46.1, une alimentation en énergie 46.2 ainsi qu'un faisceau de câbles 46.3 reliant le poste de commande 46.1 et l'alimentation en énergie 46.2 au bras robotisé 36. Selon un agencement, le faisceau de câbles 46.3 chemine le long du système de guidage 32 et éventuellement le long ou à l'intérieur des segments 40, 40' du bras robotisé 36.

Selon un mode de réalisation, le porte-outil 44 comprend au moins un actionneur, notamment pour maintenir ou relâcher le premier outil 38. Selon une première variante, le système de commande et d'alimentation en énergie 46 est configuré pour alimenter en énergie et piloter à distance le bras robotisé 36 et le porte-outil 44. Selon une deuxième variante, le dispositif de peinture 30 comprend un premier système de commande et d'alimentation en énergie 46 configuré pour alimenter en énergie et piloter à distance le bras robotisé 36 ainsi qu'un deuxième système de commande et d'alimentation en énergie configuré pour alimenter en énergie et piloter à distance le porte-outil 44.

Le dispositif de peinture 30 comprend au moins un premier système d'alimentation en fluide 48 configuré pour alimenter le premier outil 38 en fluide. Selon un mode de réalisation, le premier système d'alimentation en fluide 48 comprend au moins une alimentation en fluide 48.1 ainsi qu'au moins un conduit de fluide 48.2 configuré pour acheminer un fluide entre l'alimentation en fluide 48.1 et le premier outil 38. Selon les cas, le conduit de fluide 48.2 est directement relié au premier outil 38 ou/et par l'intermédiaire du porte-outil 44.

Lorsque le premier outil 38 est configuré pour pulvériser de la peinture, l'alimentation en fluide 48.1 est un réservoir configuré pour stocker de la peinture et le premier système d'alimentation en fluide 48 comprend au moins une pompe pour acheminer la peinture du réservoir jusqu'au premier outil 38.

Selon une particularité de l'invention, le dispositif de peinture 30 comprend au moins un support 50 supportant l'alimentation en fluide 48.1 et relié au premier support mobile 34. Selon une première configuration, le support 50 et le premier support mobile 34 sont reliés par une liaison rigide et permanente ou ne forment qu'un unique et même élément. Selon une deuxième configuration, le support 50 est un deuxième support mobile, distinct du premier support mobile 34, configuré pour se déplacer le long du système de guidage 32 relié par une liaison 52 au premier support mobile 34. Selon un agencement, cette liaison 52 est articulée. Quelle que soit la configuration, l'alimentation en fluide 48.1 est proche du bras robotisé 36. Par conséquent, le conduit de fluide 48.2 présente une longueur réduite de l'ordre de quelques mètres, ce qui facilite l'écoulement du fluide. De plus, lors du changement de peinture appliquée avec le premier outil 38, l'opération de nettoyage du conduit de fluide 48.2 engendre moins de pertes de produits (peintures, vernis, ...), dure moins longtemps et nécessite moins de produits de nettoyage du fait de la longueur réduite du conduit de fluide 48.2.

Selon une configuration, le dispositif de peinture 30 comprend un système de commande et d'alimentation en énergie 48' configuré pour alimenter en énergie et piloter à distance le premier outil 38 comportant un poste de commande et/ou une alimentation en énergie ainsi qu'un faisceau de câbles reliant le poste de commande et/ou l'alimentation en énergie 46.2 au premier outil 38.

Selon un mode de réalisation privilégié, le premier outil 38 est relié à l'extrémité libre 36.2 du bras robotisé 36 par une première liaison démontable 54. En complément, le premier système d'alimentation en fluide 48 associé au premier outil 38 est relié au premier support mobile 34 par une liaison démontable. Selon une configuration visible sur la figure 2, lorsque le premier système d'alimentation en fluide 48 est fixé sur un deuxième support mobile 50, la liaison 52 reliant les premier et deuxième supports mobiles 34, 50 est une liaison démontable.

Par une liaison démontable, on entend une liaison qui peut être rapidement démontée et remontée de manière répétée et ce sans être endommagée. Selon une configuration, la première liaison démontable 54 reliant le premier outil 38 à l'extrémité libre 36.2 est configurée pour pouvoir être montée et démontée de manière automatisée.

Selon un mode de réalisation, lorsque le premier outil 38 est relié à l'extrémité libre 36.2 du bras robotisé 36 par une première liaison démontable 54, le dispositif de peinture 30 comprend, en plus du premier outil 38, au moins un deuxième outil configuré pour être directement ou indirectement solidarisé à l'extrémité libre 36.2 du bras robotisé 36. Ainsi, les premier et deuxième outils 38 sont alternativement reliés à l'extrémité libre 36.2 du bras robotisé 36.

Selon ce mode de réalisation, le dispositif de peinture 30 n'est pas exclusivement dédié aux opérations de peinture. Il peut être utilisé pour réaliser des opérations complémentaires à l'opération de peinture, comme les opérations de préparation des surfaces à peindre (sablage ou dégraissage).

Comme illustré sur les figures 5 et 6, quel que soit le mode de réalisation, le dispositif de peinture 30 comprend un premier outil 38 ainsi qu'au moins un équipement 56 directement ou indirectement relié au premier outil 38 par au moins une liaison ombilicale 58. L'équipement 56 est choisi parmi un système d'alimentation en fluide et/ou en énergie, un système d'aspiration d'un fluide. L'invention n'est pas limitée à ces équipements. A titre d'exemple, l'équipement 56 pourrait être un système de commande ou tout autre système. Selon un premier agencement visible sur la figure 5, la liaison ombilicale 58 est directement reliée au premier outil 38. Selon un autre agencement, la liaison ombilicale 58 est reliée au premier outil 38 via le porte-outil 44. Selon un autre agencement visible sur la figure 6, la liaison ombilicale 58 est directement reliée au premier outil 38 et/ou indirectement au premier outil 38 via le porte-outil 44.

Selon une particularité de l'invention, au moins un équipement 56 associé au premier outil 38 est relié au premier support mobile 34 supportant le bras robotisé 36. Cette solution permet de réduire la longueur de la liaison ombilicale 58, ce qui facilite l'écoulement d'un fluide dans la liaison ombilicale 58. De plus, lors du changement de produit appliqué avec le premier outil 38, l'opération de nettoyage de la liaison ombilicale 58 engendre moins de pertes de produits (peintures, vernis, ...), dure moins longtemps et nécessite moins de produits de nettoyage, comme des solvants par exemple, du fait de la longueur réduite de la liaison ombilicale. Selon les cas, l'équipement 56 est relié à :
- un deuxième support mobile 50 configuré pour se déplacer le long du système de guidage 32 et relié au premier support mobile 34,
- un support 50' relié de manière rigide et permanente au premier support mobile 34 ou ne formant qu'un seul et même élément avec le premier support mobile 34.

Selon un mode de réalisation, le premier outil 38 est amovible et le dispositif de peinture 30 est configuré pour utiliser au moins un deuxième outil en plus du premier outil 38. Selon ce mode de réalisation visible notamment sur la figure 6, le premier outil 38 est associé à :
- au moins un premier équipement 56 dédié au premier outil 38 et directement ou indirectement relié au premier outil 38 par une première liaison ombilicale 58,
- au moins un deuxième équipement 56' commun à plusieurs outils et directement ou indirectement relié au premier outil 38 par une deuxième liaison ombilicale 58'.

Dans ce cas, le premier équipement 56 est relié au premier support mobile 34 par une liaison démontable. Lorsque ce premier équipement 56 est fixé sur un deuxième support mobile 50, ce dernier est relié au premier support par une liaison 52 démontable. Selon ce mode de réalisation, le premier outil 38, chaque premier équipement 56 et chaque première liaison ombilicale 58 peuvent être détachés du bras robotisé 36 et du premier support mobile 34. Chaque deuxième équipement 56' est relié de manière permanente du premier support mobile 34.

Après le retrait du premier outil 38 et chaque premier équipement 56 qui lui est dédié, un deuxième outil peut être monté à l'extrémité libre 36.2 du bras robotisé 36 à la place du premier outil 38. Si ce deuxième outil nécessite, en plus du deuxième équipement 56', au moins un équipement spécifique, ce dernier peut être relié au premier support mobile 34 en lieu et place du premier équipement 56 dédié au premier outil 38.

Selon une configuration, au moins une liaison ombilicale 58, notamment celle reliant le premier outil 38 et un premier équipement 56 amovibles, est solidarisée au bras robotisé 36 par au moins une liaison démontable 59, comme illustré sur la figure 2. Chaque deuxième liaison ombilicale 58' reliée à un deuxième équipement 56' fixe peut être solidarisée au bras robotisé par une liaison non démontable.

Le fait de pouvoir utiliser différents outils avec le bras robotisé 36 confère au dispositif de peinture 30 une plus grande polyvalence.

Selon une application, un procédé complet de peinture comprend plusieurs étapes successives différentes, comme des opérations de nettoyage, de ponçage, de masquage, de pulvérisation, d'inspection, nécessitant chacune un outil qui peut être spécifique à l'opération, cet outil requérant éventuellement une liaison ombilicale 58 spécifique et/ou un équipement spécifique.

Lorsque le bras robotisé 36 est configuré pour supporter différents outils, contrairement à l'art antérieur qui prévoit une unique liaison ombilicale configurée pour fournir les différentes énergies, les différents fluides et les différentes données des différents outils, il est selon l'invention possible de changer l'équipement et/ou la liaison ombilicale afin de l'adapter à l'outil utilisé. Par conséquent, la liaison ombilicale présente une section moins importante que celle d'une liaison ombilicale de l'art antérieur.

A titre d'exemple, le deuxième équipement 56' peut être une station d'aspiration, le deuxième outil peut être un outil de ponçage et la deuxième liaison ombilicale 58' peut être un conduit configuré pour véhiculer l'air et les poussières de l'outil de ponçage vers la station d'aspiration.

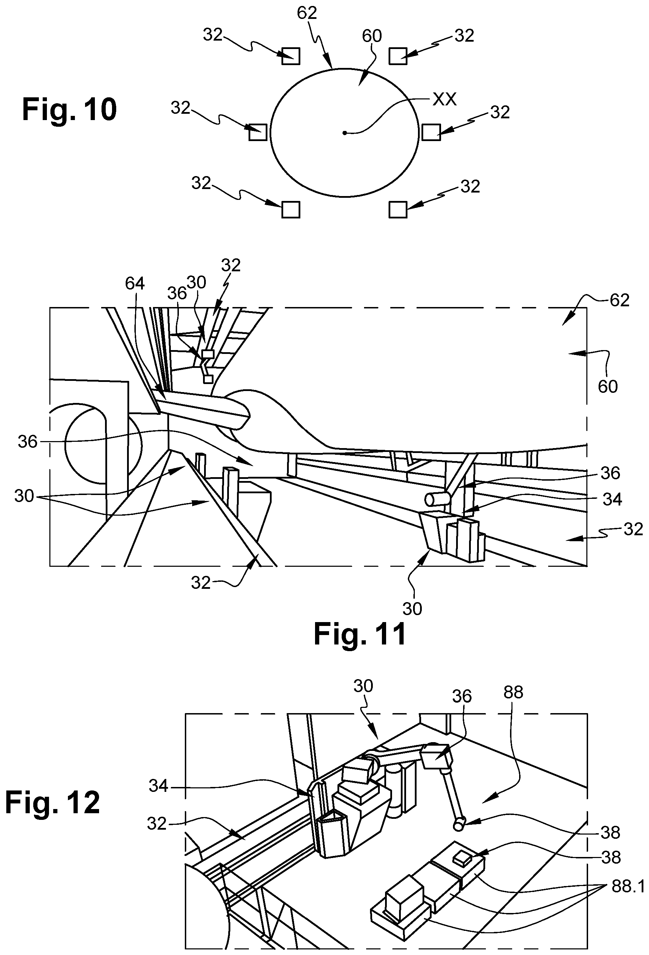

Comme illustré sur la figure 11, une installation de peinture adaptée pour peindre un aéronef 60 comprend au moins un dispositif de peinture 30.

De manière connue, chaque aéronef 60 comprend un fuselage 62 qui s'étend entre une pointe avant et une pointe arrière, des ailes 64 qui s'étendent de part et d'autre du fuselage 62 ainsi qu'un empennage 66, positionné au niveau de la pointe arrière, comportant une partie verticale 66.1 ainsi que des parties horizontales 66.2 situées de part et d'autre de la pointe arrière. L'aéronef 60 présente un axe longitudinal aéronef XX qui est horizontal lorsque l'aéronef 60 est au sol et passe par les pointes avant et arrière.

Le fuselage 62 présente une longueur correspondant à une dimension du fuselage 62 prise horizontalement de la pointe avant à la pointe arrière ainsi qu'une largeur correspondant à une dimension du fuselage 62 prise horizontalement, dans un plan transversal perpendiculaire à l'axe longitudinal aéronef XX. Le fuselage 62 présente une partie avant 62A située à l'avant des ailes 64 ainsi qu'une partie arrière 62B située à l'arrière des ailes 64. Chaque aile 64 comprend un bord de fuite 64.1 et forme avec le fuselage 62 un angle donné, cet angle étant mesuré entre le bord de fuite 64.1 et le fuselage 62.

L'installation de peinture comprend une plate-forme S sur laquelle est immobilisé l'aéronef 60 à peindre ainsi qu'au moins un système de guidage 32 rectiligne orienté selon une direction longitudinale, l'aéronef 60 étant immobilisé sur la plate-forme S de manière à ce que l'axe longitudinal aéronef XX soit sensiblement parallèle à la direction longitudinale. Comme illustré sur la figure 11, un ou plusieurs bras robotisé(s) peu(ven)t se déplacer le long d'un même système de guidage 32.

Selon un agencement visible sur la figure 10, l'installation de peinture comprend plusieurs systèmes de guidage 32, agencés de manière symétrique par rapport à un plan médian vertical PMV, répartis selon la direction verticale et autour d'un cercle présentant un diamètre supérieur à celui du fuselage de l'aéronef à peindre. Selon un agencement, l'installation de peinture comprend trois systèmes de guidage 32 positionnés de chaque côté du plan médian vertical PMV. En fonctionnement, un aéronef 60 à peindre est immobilisé sur la plate-forme S de sorte que l'axe longitudinal aéronef XX soit contenu dans le plan médian vertical PMV. Selon un mode de réalisation, chaque système de guidage 32 comprend au moins une glissière ou un rail rectiligne parallèle à la direction longitudinale. Chaque système de guidage 32 présente une longueur supérieure à celle de l'aéronef 60.

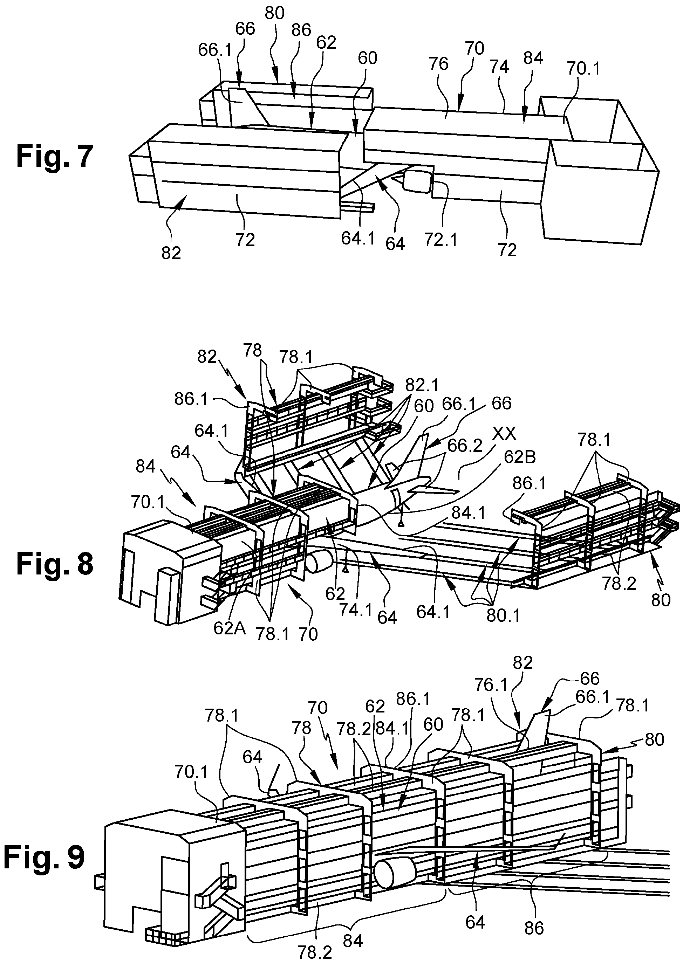

Selon un mode de réalisation visible sur les figures 7 à 9, l'installation de peinture comprend une cabine de peinture 70 située, à l'intérieur d'un bâtiment, sur une plate-forme S (comme le sol) configurée pour permettre à un aéronef à peindre d'y stationner, ladite cabine de peinture 70 comportant des première et deuxième parois latérales 72, 74 parallèles entre elles et à la direction longitudinale ainsi qu'une paroi supérieure 76, distante de la plate-forme S, sensiblement parallèle à la plate-forme S et reliant les première et deuxième parois latérales 72, 74. Selon un agencement, la paroi supérieure 76 est sensiblement horizontale et les première et deuxième parois latérales 72, 74 sont sensiblement verticales.

Les parois 72, 74, 76 sont rigides et présentent une longueur (dimension prise selon la direction longitudinale) supérieure ou égale à la longueur du fuselage 62 de manière à ce que le fuselage 62 de l'aéronef puisse contenir dans la zone intérieure délimitée par la cabine de peinture 70. Les première et deuxième parois latérales 72, 74 comprennent des première et deuxième ouvertures latérales 72.1, 74.1 dimensionnées pour permettre aux ailes 64 de traverser les première et deuxième parois latérales 72, 74 en laissant un faible jeu autour des ailes 64. Grâce à ces ouvertures latérales 72.1, 74.1, les première et deuxième parois latérales 72, 74 sont rapprochées du fuselage 62, ce qui permet de réduire le volume de la zone intérieure dans laquelle est positionné le fuselage 62. Selon un agencement, le fuselage 62 est approximativement centré entre les première et deuxième parois latérales 72, 74. Selon une configuration, les première et deuxième parois latérales 72, 74 sont espacées d'une distance comprise entre 1,5 et 3 fois la largeur du fuselage.

Selon un mode de réalisation, la paroi supérieure 76 comprend une ouverture supérieure 76.1 dimensionnée pour permettre à l'empennage 66, et plus particulièrement à sa partie verticale 66.1, de traverser la paroi supérieure 76 en laissant un faible jeu autour de l'empennage 66. Grâce à cette ouverture supérieure 76.1, la paroi supérieure 76 peut être rapprochée du fuselage 62, ce qui permet de réduire le volume de la zone intérieure dans laquelle est positionné le fuselage 62. Pour donner un ordre de grandeur, la paroi supérieure 76 est séparée de la plate-forme S d'une distance comprise entre 1,5 et 3 fois la hauteur du fuselage 62 (dimension prise selon une direction verticale).

Comme illustré sur les figures 8 et 9, la cabine de peinture 70 comprend au moins une structure 78 (visible sur les figures 8 et 9) supportant les première et deuxième parois latérales 72, 74, la paroi supérieure 76 formant l'enceinte de la cabine de peinture ainsi que chaque système de guidage 32. Selon un mode de réalisation, la structure 78 comprend des cadres 78.1 positionnés dans des plans transversaux ainsi que des longerons 78.2 reliant les cadres 78.1 entre eux et orientés parallèlement à la direction longitudinale. Bien entendu, l'invention n'est pas limitée à cette configuration pour la structure 78.

Selon un mode de réalisation, la cabine de peinture 70 comprend au moins des première et deuxième parties 80, 82 comportant respectivement au moins une partie des première et deuxième parois latérales 72, 74, au moins une des première et deuxième parties 80, 82 étant mobile entre une position écartée, correspondant à un état ouvert de la cabine de peinture 70 comme illustré sur les figures 7 à 8, dans laquelle un fuselage d'un aéronef peut être positionné entre les première et deuxième parties 80, 82 ainsi qu'une position rapprochée, correspondant à un état fermé de la cabine de peinture 70 comme illustré sur la figure 9.

La première partie 80 comprend au moins une partie de la première paroi latérale 72 ainsi qu'une première portion de la paroi supérieure 76. La deuxième partie 82 comprend au moins une partie de la deuxième paroi latérale 74 ainsi qu'une deuxième portion de la paroi supérieure 76, les première et deuxième portions de la paroi latérale étant jointives lorsque les première et deuxième parties 80, 82 sont rapprochées et la cabine de peinture 70 est à l'état fermé.

Selon une configuration, les première et deuxième parties 80, 82 sont sensiblement symétriques par rapport au plan médian vertical PMV. Dans ce cas, les première et deuxième portions de la paroi supérieure 76 comprennent des découpes de manière à former l'ouverture supérieure 76.1 lorsque les première et deuxième parties 80, 82 sont rapprochées. Selon une configuration, l'installation de peinture comprend, pour chacune des première et deuxième parties 80, 82, au moins une liaison glissière 80.1, 82.1, reliant la première ou deuxième partie 80, 82 et la plate-forme S, configurée pour permettre à la première ou deuxième partie 80, 82 de se translater entre les états ouvert et fermé.

Pour réduire les dimensions des ouvertures latérales 72.1, 74.1, chaque liaison glissière 80.1, 82.1 forme avec le plan médian vertical PMV un angle sensiblement égal à celui formé entre le fuselage 62 et chaque aile 64.

Selon une configuration, l'installation de peinture comprend, pour chacune des première et deuxième parties 80, 82, au moins une motorisation pour déplacer les première et deuxième parties 80, 82.

La cabine de peinture 70 comprend un premier tronçon 84 configuré pour loger la partie avant 62A ainsi qu'un deuxième tronçon 86 configuré pour loger la partie arrière 62B. Les premier et deuxième tronçons 84, 86 comprennent respectivement des première et deuxième faces terminales 84.1, 86.1 positionnées dans des plans transversaux. Au moins un des premier et deuxième tronçons 84, 86 est mobile entre une première position, correspondant à l'état fermé de la cabine de peinture 70, dans laquelle les première et deuxième faces transversales 84.1, 86.1 sont plaquées l'une contre l'autre ainsi qu'une deuxième position, correspondant à l'état ouvert de la cabine de peinture 70, dans laquelle les première et deuxième faces transversales 84.1, 86.1 sont écartées.

Selon une configuration, le premier tronçon 84 est fixe. En complément, le deuxième tronçon 86 comprend des première et deuxième parties 80, 82 mobiles entre une position écartée du plan médian vertical correspondant à l'état ouvert de la cabine de peinture 70 (visible sur les figures 7 et 8) et une position rapprochée du plan médian vertical correspondant à l'état fermé de la cabine de peinture 70 (visible sur la figure 9). Cette configuration permet de limiter les dimensions des pièces en mouvement et leur course.

Selon un agencement, le premier tronçon 84 comprend les ouvertures latérales 72.1, 74.1 qui débouchent au niveau de la première face terminale 84.1. En variante, les ouvertures latérales 72.1, 74.1 sont situées sur le deuxième tronçon 86 ou à cheval sur les premier et deuxième tronçons 84, 86.

Selon un mode de réalisation visible sur les figures 7 à 9 et 12, l'installation de peinture comprend au moins une zone de stockage 88 configurée pour stocker au moins un outil, au moins un accessoires d'outil ou au moins consommable, comme un disque de ponçage par exemple, positionnée dans le prolongement de la cabine de peinture 70, au niveau de la première extrémité 70.1 de la cabine de peinture 70. Selon un agencement, chaque système de guidage 32 est suffisamment long pour être positionné en partie dans la zone de stockage 88.

Selon un aménagement, la zone de stockage 88 comprend au moins un support 88.1 configuré pour supporter au moins un outil 38, au moins un accessoire d'outil ou au moins un consommable. Chaque support 88.1 et chaque système de guidage 32 sont agencés de sorte qu'un bras robotisé 36 coulissant le long du système de guidage 32 puisse atteindre un outil 38, un accessoire d'outil ou un consommable positionné sur le support 88.1.

Selon un mode de réalisation visible sur la figure 4, l'installation de peinture comprend au moins un chariot support 90 configuré pour supporter au moins un outil 38, au moins un accessoire d'outil ou au moins un consommable. Ce chariot support 90 est également configuré pour supporter un équipement 56 relié par une liaison ombilicale 58 à l'outil 38. Ce chariot support 90 permet de déplacer au moins un outil 38, au moins un accessoire d'outil ou au moins un consommable et chaque équipement 56 relié à l'outil 38 par une liaison ombilicale 58 et/ou de réaliser des opérations de maintenance sur l'outil 38. Selon une configuration, le chariot support 90 est adapté pour supporter plusieurs outils simultanément. Bien entendu, l'invention n'est pas limitée à l'opération de peinture. Ainsi, le dispositif de peinture et l'installation de peinture peuvent être utilisés pour réaliser des opérations préparatoires à l'opération de peinture, comme une opération d'inspection initiale, de ponçage, de nettoyage, de masquage par exemple, et/ou des opérations ultérieures comme des opérations de décoration, d'inspection finale par exemple.

## Revendications

1. Installation de peinture adaptée pour peindre un aéronef comprenant au moins un dispositif de peinture comprenant au moins un système de guidage (32), au moins un premier support mobile (34) configuré pour se déplacer le long du système de guidage (32), un bras robotisé (36) solidaire du premier support mobile (34) et comportant une extrémité libre (36.2), au moins un premier outil (38) relié à l'extrémité libre (36.2) du bras robotisé (36) ainsi qu'au moins un premier équipement (56) relié par au moins une liaison ombilicale (58) au premier outil (38) ; le premier équipement (56) associé au premier outil (38) étant relié à un deuxième support mobile (50), lui-même relié par une liaison (52) articulée au premier support mobile (34) supportant le bras robotisé (36) et configuré pour se déplacer le long du système de guidage (32) ; l'installation de peinture comprenant une cabine de peinture (70) qui comporte des parois (72, 74, 76) formant une enceinte ainsi qu'au moins une structure (78) supportant les parois (72, 74, 76) et chaque système de guidage (32) ; **caractérisée en ce que** l'installation de peinture comprend au moins une zone de stockage (88) positionnée dans le prolongement de la cabine de peinture (70), **en ce que** ledit au moins un système de guidage (32) est suffisamment long pour être positionné en partie dans la zone de stockage (88) et **en ce que** la zone de stockage (88) comprend au moins un support (88.1) configuré pour supporter au moins un outil (38), au moins un accessoire d'outil ou au moins un consommable, le support (88.1) et ledit au moins un système de guidage (32) étant agencés de sorte qu'un bras robotisé (36) coulissant le long dudit au moins un système de guidage (32) puisse atteindre un outil (38), un accessoire d'outil ou un consommable positionné sur le support (88.1).

2. Installation de peinture selon la revendication précédente, **caractérisé en ce que** le premier outil (38) est relié à l'extrémité libre (36.2) du bras robotisé (36) par une première liaison démontable (54).

3. Installation de peinture selon la revendication précédente, **caractérisé en ce que** le premier équipement (56) est relié au premier support mobile (34) par une liaison démontable.

4. Installation de peinture selon la revendication précédente, **caractérisé en ce que** le premier équipement (56) est solidaire d'un deuxième support mobile (50) relié par une liaison (52) démontable au premier support mobile (34).

5. Installation de peinture selon la revendication précédente, **caractérisé en ce que** le premier outil (38) est associé à au moins un premier équipement (56) dédié au premier outil (38) et directement ou indirectement relié au premier outil (38) par une première liaison ombilicale (58) ainsi qu'à au moins un deuxième équipement (56') commun à plusieurs outils et directement ou indirectement relié au premier outil (38) par une deuxième liaison ombilicale (58'), chaque premier équipement (56) étant relié de manière démontable au premier support mobile (34), chaque deuxième équipement (56') étant relié de manière permanente du premier support mobile (34).

6. Installation selon l'une des revendications précédentes, **caractérisé en ce qu'**au moins une liaison ombilicale (58) est solidarisée au bras robotisé (36) par au moins une liaison démontable (59).

7. Installation de peinture selon l'une des revendications précédentes, **caractérisée en ce que** l'installation de peinture comprend plusieurs systèmes de guidage (32) agencés de manière symétrique par rapport à un plan médian vertical (PMV) et répartis autour d'un cercle présentant un diamètre supérieur à celui d'un fuselage d'un aéronef à peindre.

8. Installation de peinture selon l'une des revendications précédentes, **caractérisée en ce que** l'installation de peinture comprend au moins un chariot support (90) configuré pour supporter au moins un outil (38).

## Patentansprüche

1. Lackieranlage, die zum Lackieren eines Luftfahrzeugs geeignet ist, mit wenigstens einem Führungssystem (32), mit wenigstens einer ersten beweglichen Halterung (34), die dazu eingerichtet ist, sich entlang des Führungssystems (32) zu bewegen, mit einem Roboterarm (36), der fest mit der ersten beweglichen Halterung (34) verbunden ist und ein freies Ende (36.2) aufweist, mit wenigstens einem ersten Werkzeug (38), das mit dem freien Ende (36.2) des Roboterarms (36) verbunden ist, sowie mit wenigstens einem ersten Arbeitsmittel (56), das durch wenigstens eine Versorgungsleitung (58) mit dem ersten Werkzeug (38) verbunden ist, wobei das dem ersten Werkzeug (38) zugeordnete erste Arbeitsmittel (56) mit einer zweiten beweglichen Halterung (50) verbunden ist, welche ihrerseits durch eine Gelenkverbindung (52) mit der ersten beweglichen Halterung (34) verbunden ist, die den Roboterarm (36) trägt und dazu eingerichtet ist, sich entlang des Führungssystems (32) zu bewegen, wobei die Lackieranlage eine Lackierkabine (70) umfasst, die Wände (72, 74, 76), die eine Umschließung bilden, sowie wenigstens eine Struktur (78) aufweist, die die Wände (72, 74, 76) und jedes Führungssystem (32) trägt, **dadurch gekennzeichnet, dass** die Lackieranlage wenigstens einen Lagerbereich (88) aufweist, der in der Verlängerung der Lackierkabine (70) angeordnet ist, dass das besagte wenigstens eine Führungssystem (32) ausreichend lang ist, um teilweise in dem Lagerbereich (88) positioniert zu werden, und dass der Lagerbereich (88) wenigstens einen Träger (88.1) aufweist, der dazu eingerichtet ist, wenigstens ein Werkzeug (38), wenigstens ein Werkzeugzubehör oder wenigstens ein Verbrauchsmaterial zu tragen, wobei der Träger (88.1) und das besagte wenigstens eine Führungssystem (32) so angeordnet sind, dass ein Roboterarm (36), der entlang des besagten wenigstens einen Führungssystems (32) gleitet, ein auf dem Träger (88.1) angeordnetes Werkzeug (38), Werkzeugzubehör oder Verbrauchsmaterial erreichen kann.

2. Lackieranlage nach dem vorhergehenden Anspruch, **dadurch gekennzeichnet, dass** das erste Werkzeug (38) mit dem freien Ende (36.2) des Roboterarms (36) durch eine erste lösbare Verbindung (54) verbunden ist.

3. Lackieranlage nach dem vorhergehenden Anspruch, **dadurch gekennzeichnet, dass** das erste Arbeitsmittel (56) mit der ersten beweglichen Halterung (34) durch eine lösbare Verbindung verbunden ist.

4. Lackieranlage nach dem vorhergehenden Anspruch, **dadurch gekennzeichnet, dass** das erste Arbeitsmittel (56) fest mit einer zweiten beweglichen Halterung (50) verbunden ist, die durch eine lösbare Verbindung (52) mit der ersten beweglichen Halterung (34) verbunden ist.

5. Lackieranlage nach dem vorhergehenden Anspruch, **dadurch gekennzeichnet, dass** das erste Werkzeug (38) wenigstens einem ersten Arbeitsmittel (56) zugeordnet ist, das für das erste Werkzeug (38) bestimmt ist und direkt oder indirekt mit dem ersten Werkzeug (38) durch eine erste Versorgungsleitung (58) verbunden ist, sowie wenigstens einem zweiten Arbeitsmittel (56') zugeordnet ist, das mehreren Werkzeugen gemeinsam ist und direkt oder indirekt mit dem ersten Werkzeug (38) durch eine zweite Versorgungsleitung (58') verbunden ist, wobei jedes erste Arbeitsmittel (56) lösbar mit der ersten beweglichen Halterung (34) verbunden ist und jedes zweite Arbeitsmittel (56') dauerhaft mit der ersten beweglichen Halterung (34) verbunden ist.

6. Anlage nach einem der vorhergehenden Ansprüche, **dadurch gekennzeichnet, dass** wenigstens eine Versorgungsleitung (58) am Roboterarm (36) durch wenigstens eine lösbare Verbindung (59) befestigt ist.

7. Lackieranlage nach einem der vorhergehenden Ansprüche, **dadurch gekennzeichnet, dass** die Lackieranlage mehrere Führungssysteme (32) aufweist, die symmetrisch in Bezug auf eine vertikale Mittelebene (PMV) angeordnet und um einen Kreis verteilt sind, der einen Durchmesser aufweist, der größer ist als der eines Rumpfes eines zu lackierenden Luftfahrzeugs.

8. Lackieranlage nach einem der vorhergehenden Ansprüche, **dadurch gekennzeichnet, dass** die Lackieranlage wenigstens einen Trägerwagen (90) aufweist, der dazu eingerichtet ist, wenigstens ein Werkzeug (38) zu tragen.

## Claims

1. Painting installation adapted for painting an aircraft comprising at least one painting device comprising at least one guide system (32), at least a first movable support (34) configured to move along the guide system (32), a robotic arm (36) secured to the first movable support (34) and having a free end (36.2), at least a first tool (38) connected to the free end (36.2) of the robotic arm (36), and at least a first piece of equipment (56) connected by at least one umbilical connection (58) to the first tool (38); the first piece of equipment (56) associated with the first tool (38) being connected to a second movable support (50), which is itself connected by an articulated connection (52) to the first movable support (34) carrying the robotic arm (36) and configured to move along the guide system (32); the painting installation comprising a painting booth (70) which has walls (72, 74, 76) forming an enclosure and at least one structure (78) supporting the walls (72, 74, 76) and each guide system (32); **characterized in that** the painting installation comprises at least one storage zone (88) positioned as a continuation of the painting booth (70), **in that** said at least one guide system (32) is sufficiently long to be positioned partly within the storage zone (88) and **in that** the storage zone (88) comprises at least one support (88.1) configured to carry at least one tool (38), at least one tool accessory or at least one consumable, the support (88.1) and said at least one guide system (32) being arranged such that a robotic arm (36) sliding along the guide system (32) is able to reach a tool (38), a tool accessory or a consumable positioned on the support (88.1).

2. Painting installation as claimed in the preceding claim, wherein the first tool (38) is connected to the free end (36.2) of the robotic arm (36) by a first releasable connection (54).

3. Painting installation as claimed in the preceding claim, wherein the first piece of equipment (56) is connected to the first movable support (34) by a releasable connection.

4. Painting installation as claimed in the preceding claim, wherein the first piece of equipment (56) is integral with a second movable support (50) connected by a releasable connection (52) to the first movable support (34).

5. Painting installation as claimed in the preceding claim, wherein the first tool (38) is associated with at least a first piece of equipment (56) dedicated to the first tool (38) and connected directly or indirectly to the first tool (38) by a first umbilical connection (58), and with at least a second piece of equipment (56') common to a plurality of tools and connected directly or indirectly to the first tool (38) by a second umbilical connection (58'), each first piece of equipment (56) being releasably connected to the first movable support (34), each second piece of equipment (56') being permanently connected to the first movable support (34).

6. Installation as claimed in one of the preceding claims, wherein at least one umbilical connection (58) is attached to the robotic arm (36) by at least one releasable connection (59).

7. Painting installation as claimed in one of the preceding claims, wherein the painting installation comprises a plurality of guide systems (32) arranged symmetrically relative to a vertical mid-plane (PMV) and distributed around a circle having a diameter greater than that of a fuselage of an aircraft to be painted.

8. Painting installation as claimed in one of preceding claims, wherein the painting installation comprises at least one support carriage (90) configured to carry at least one tool (38).
